# EUROPÄISCHE PATENTSCHRIFT

(11) **EP 0 358 859 B1**
(45) Veröffentlichungstag und Bekanntmachung des Hinweises auf die Patenterteilung: **23.03.1994**
(21) Anmeldenummer: 89110973.8
(22) Anmeldetag: 16.06.1989
(51) Int. Cl.: H04N 5/63

(54) **Betriebsartenwähler zur Stromversorgung eines tragbaren Fernsehgerätes**
Function selector for a portable television power supply
Sélecteur de mode pour l'alimentation en courant d'un téléviseur portable

(30) Priorität: 03.09.1988 DE 3830088
(43) Veröffentlichungstag der Anmeldung: 21.03.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Rohrbacher, Josef GRUNDIG E.M.V. Elek. Mech., KG Kurgartenstrasse 37 D-8519 Fürth Bay. (DE)

(56) Entgegenhaltungen:
- DE-U- 8 711 908

## Beschreibung

Die Erfindung bezieht sich auf eine Einrichtung zur Wahl der Betriebsart für Fernsehgeräte, insbesondere tragbare Fernsehgeräte, bei denen der Betriebsartenwähler als Kulissenschieber konstruiert ist, der jeweils nur zwei Anschlüsse freigibt, die zueinander kompatibel sind.

Eine solche Einrichtung ist bekannt aus der Patentanmeldung DE-A-38 21 114 (veröffentlicht am 28. 12. 1989) der Anmelderin, wobei dort noch zusätzliche Schalter benötigt werden, um Berührungssicherheit zu gewährleisten oder zwischen verschiedenen Betriebsmoden zu schalten.

Aus DE-U-87 11 908 ist eine einfache Einrichtung zur Wahl der Stromversorgung in einem Fernsehgerät bekannt, die eine Abdeckplatte zur wechselseitigen Abdeckung zweier Stromanschlußbuchsen aufweist.

Die Aufgabe der Erfindung besteht darin, die Anschlüsse so anzuordnen, daß zusammen mit dem Kulissenschieber nur zueinander kompatible Anschlüsse freigegeben werden, so daß zusätzliche Schalter nicht mehr notwendig sind.

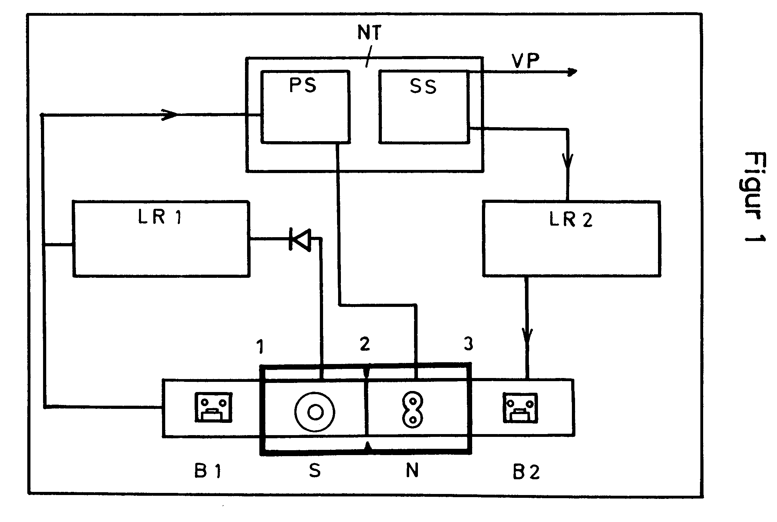

Die Erfindung wird im folgenden an einem Ausführungsbeispiel nach Figur 1 erläutert:
Hier sind die Anschlüsse in einer Reihe angeordnet, wobei links ein Batterieanschluß B 1 vorgesehen ist, anschließend ein Anschluß für ein Solar-Panel S, dann für die Netzversorgung N und schließlich ein zweiter Batterieanschluß B2. Der Anschluß B2 ist verbunden mit einem Laderegler LR2, dieser wiederum mit der Sekundärseite des Netzteils. Eine an B2 angeschlossene Batterie kann nur geladen werden; mit ihr ist kein Batteriebetrieb möglich. Der Netzanschluß ist mit der Primärseite des Netzteils verbunden, der Solaranschluß mit dem Laderegler LR1, der wiederum eine Verbindung zur Batterie B1 hat. Der Anschluß B1 führt auf die Primärseite des Netzteils; mit ihm kann also das Fernsehgerät betrieben werden.

Wenn der Kulissenschieber in Position 1 ist, liegt der Netzanschluß und der Batterieanschluß B2 frei. In dieser Position werden über das Netzteil die Versorgungsspannung VP für das Fernsehgerät an der Sekundärseite SS bereitgestellt. Wird nicht die gesamte Leistung für den Betrieb benötigt, z.B. im Bereitschaftsbetrieb, dann kann zusätzlich noch über den Anschluß B2 eine Batterie geladen werden. Wird das Fernsehgerät ganz ausgeschaltet, dann kann mit einem Schalter, über den nur das Netzteil und ein Laderegler versorgt werden, ein separater Lademodus eingeschaltet werden.

Wird der Kulissenschieber in Position 2 geschoben, dann sind beide Batterieanschlüsse zugänglich. Durch den Anschluß einer Batterie an B1 kann man das Fernsehgerät mit den notwendigen Versorgungsspannungen speisen. Auch hier kann man im Bereitschaftsbetrieb zusätzlich auf eine zweite Batterie am Anschluß B2 umladen oder in einem separaten Lademodus von einer stationären Batterie, z.B. im Auto oder Boot, auf eine ander umladen, die beispielsweise zum Betreiben einer Videokamera benutzt werden kann.

In der dritten Position kann am Anschluß B1 eine Batterie und am Anschluß S ein Solar-Panal angesteckt werden. In dieser Stellung ist wieder Batteriebetrieb möglich, wobei die Batterie durch Anschluß eines Solargenerators unterstützt werden kann. Hier kann im Bereitschaftsbetrieb oder einem besonderen Lademodus eine Batterie an B1 mit einem Solar-Panel aufgeladen werden.

## Patentansprüche

1. Einrichtung zur Stromversorgung eines Fernsehgerätes, insbesondere eines tragbaren Fernsehgerätes über vier Anschlüsse und zwar für das Stromnetz, zwei externe Batterien und ein Solar-Panel, **dadurch gekennzeichnet**, daß die vier Anschlüsse in einer Zeile oder Reihe liegen, wobei die Reihenfolge so festgelegt ist, daß ein Kulissenschieber, der zwei beieinanderliegende Anschlüsse verdeckt und in drei Positionen einrasten kann, nur zwei kompatible Anschlüsse freigibt.

2. Einrichtung nach Anspruch 1, **dadurch gekennzeichnet**, daß
- in einer ersten Position des Kulissenschiebers der Netzanschluß und der zweite Batterieanschluß zugänglich sind
- in einer zweiten Position beide Batterieanschlüsse zugänglich sind
- in einer dritten Position der erste Batterieanschluß und der Anschluß für das Solar-Panel zugänglich sind.

3. Einrichtung nach Anspruch 2, **dadurch gekennzeichnet**, daß der Ladebetrieb nur im Bereitschaftsbetrieb des Fernsehgerätes oder einem besonderen Lademodus, der über einen eigenen Schalter in Betrieb genommen wird, erfolgt.

4. Einrichtung nach einem oder mehreren der Ansprüche 1 bis 2, **dadurch gekennzeichnet**, daß das Gerät über zwei externe Batterieanschlüsse verfügt, wobei der erste Anschluß zum Betreiben des Fernsehgerätes und zum Laden mit einem Solargenerator dient und der zweite Anschluß, der zusammen mit dem Netzanschluß zugänglich ist, nur Ladefunktion hat.

## Claims

1. Device for supplying power to a television set, particularly a portable television set via four terminals, namely for the mains system, two external batteries and one solar panel, characterized in that the four terminals are located in one line or row, the order being determined in such a manner that a slotted slider which covers two adjacently located terminals and can lock into three positions only releases two compatible terminals.

2. Device according to Claim 1, characterized in that
- the mains terminal and the second battery terminal are accessible in a first position of the slotted slider,
- both battery terminals are accessible in a second position,
- the first battery terminal and the terminal for the solar panel are accessible in a third position.

3. Device according to Claim 2, characterized in that charging only occurs in the stand-by mode of the television set or in a particular charging mode which is activated via a separate switch.

4. Device according to one or more of Claims 1 to 2, characterized in that the appliance has two external battery terminals, the first terminal being used for operating the television set and for charging with a solar generator and the second terminal, which is accessible together with the mains terminal, only having a charging function.

## Revendications

1. Dispositif pour alimenter en courant un téléviseur, notamment un téléviseur portable, par l'intermédiaire de quatre bornes, à savoir pour le réseau d'alimentation, deux batteries extérieures et un panneau solaire, caractérisé par le fait que les quatre bornes sont situées sur une ligne ou une rangée, la succession étant fixée de telle sorte qu'un curseur, qui masque deux bornes disposées côte-à-côte et peut s'encliqueter dans trois positions, ne libère que deux bornes compatibles.

2. Dispositif selon la revendication 1, caractérisé en ce que :
- dans une première position, la borne du réseau et la seconde borne de la batterie sont accessibles ;
- dans une seconde position, les deux bornes de la batterie sont accessibles ;
- dans une troisième position, la première borne de la batterie et la borne pour le panneau solaire sont accessibles.

3. Dispositif selon la revendication 2, caractérisé en ce que l'opération de charge s'effectue uniquement lorsque le téléviseur est dans l'état prêt à fonctionner ou bien dans un mode particulier de charge, qui est mis en oeuvre par l'intermédiaire d'un interrupteur particulier.

4. Dispositif selon une ou plusieurs des revendications 1 à 2, caractérisé en ce que l'appareil dispose de deux bornes extérieures de batterie, la première borne servant à faire fonctionner le téléviseur et à réaliser la charge avec un générateur solaire, tandis que la seconde borne, qui est accessible conjointement avec la borne du réseau, a seulement une fonction de charge.
